# EUROPÄISCHE PATENTSCHRIFT

(11) **EP 3 317 455 B1**
(45) Veröffentlichungstag und Bekanntmachung des Hinweises auf die Patenterteilung: **20.08.2025**
(21) Anmeldenummer: 16741241.0
(22) Anmeldetag: 29.06.2016
(51) Int. Cl.: D06H 7/00, B26D 3/28, D04H 1/4242

(54) **VERFAHREN ZUR HERSTELLUNG VON DÜNNEN CARBONFASERVLIESEN DURCH EINEN HORIZONTALSPALTPROZESS**
METHOD FOR PRODUCING THIN CARBON FIBER NONWOVENS BY A HORIZONTAL SPLITTING PROCESS
PROCÉDÉ DE FABRICATION DE NON-TISSÉS DE FIBRES DE CARBONE DE FAIBLE ÉPAISSEUR PAR UN PROCESSUS DE FENDAGE HORIZONTAL

(30) Priorität: 02.07.2015 DE 102015212417
(43) Veröffentlichungstag der Anmeldung: 09.05.2018
(73) Patentinhaber: SGL Carbon SE, 65201 Wiesbaden (DE)
(72) Erfinder: WÖHNER, Stefan, 86405 Meitingen (DE); SCHNEIDER, Dirk, 86405 Meitingen (DE); STEINRÖTTER, Michael, 86405 Meitingen (DE)
(86) Internationale Anmeldenummer: PCT/EP2016/065099
(87) Internationale Veröffentlichungsnummer: WO 2017/001453

(56) Entgegenhaltungen:
- DE-A1- 102010 004 205
- DE-A1- 19 958 973
- DE-A1- 2 547 958
- US-A- 1 161 320
- US-B2- 8 927 173

## Beschreibung

Gegenstand der Erfindung ist ein Verfahren zur Herstellung einer Schicht aus Carbonfaservlies durch Horizontalspalten von Rollenware aus Carbonfaservlies in der Probendicke sowie Verwendungen des hergestellten Materials.

Horizontal bedeutet waagerecht. Spalten ist ein Fertigungsverfahren zum Zerteilen eines Werkstücks mittels eines keilförmigen Werkzeugs.

Rollenform, beziehungsweise Rollenware bedeutet, dass ein textiles Flächengebilde aufgerollt wird, beziehungsweise aufgerollt vorliegt. Dabei kann es sich um einen Filz mit einer Länge von 20 bis 70 m und einer Breite von 1,2 bis 1,5 m handeln, der auf eine Papphülse von etwa 10 cm Breite aufgerollt wird.

Bei Carbonfaservliesen sind Dicken von etwa 2 mm bis 20 mm verfügbar, anwendbar für Ofenisolation oder als poröse Elektroden in speziellen Batteriesystemen. Herstellbar sind diese Anwendungen über mehrstufige Temperaturprozesse bei 600 bis 3000°C. Diese hohe Temperatur ist erforderlich, um bestimmte Eigenschaften wie eine hohe Reinheit oder einen niedrigen elektrischen Widerstand einzustellen. Die am Ende des Herstellungsprozesses durchgeführte Hochtemperaturbehandlung kann diskontinuierlich in Batch-Öfen erfolgen, was aus Kostengründen allerdings möglichst vermieden werden sollte. Der abschließende Temperaturschritt erfolgt daher in der Regel kontinuierlich, wobei das Material hierbei in der Regel durch die Anlage gezogen wird.

Hochtemperaturbehandlung im Sinne der Erfindung bedeutet Behandlung von Material im Temperaturbereich von 1800 bis 3000°C.

Aufgrund der auftretenden Zugkräfte ist das prozesstechnisch relevantere kontinuierliche Verfahren auf eine Mindestmaterialstärke limitiert, was eine Fertigung von sehr dünnen Materialien, zum Beispiel kleiner 2 mm in der Dicke, in diesem Prozess sehr schwierig macht.

Eine Konfektionierung der fertigen Carbonfaservliesrollen findet lediglich flächig statt. Die Stärke der Materialien ergibt sich ausschließlich aus der Dicke des Rohmaterials, eine nachträgliche Konfektionierung hinsichtlich Reduzierung der Dicke ist nicht möglich.

Sehr nachteilig an diesem Stand der Technik ist die Limitierung bezüglich der kontinuierlich bearbeitbaren Materialdicken. Die Herstellung von sehr dünnen Filzen ist derzeit nur in Batch-Prozessen möglich. Dies führt zu einer begrenzten Flexibilität, da hinsichtlich Dicke die Geometrie des Rohmaterials die Endgeometrie vorgibt. Eine Konfektionierung ist in einer industriellen Fertigung bei einer Nutzung von Rollenware als Halbzeug nur flächig möglich.

DE 2547958 offenbart ein Verfahren zum Herstellen dünner Faservliese aus Natur- und Chemiefasern.

GB 1,116,320 offenbart ein Verfahren zum Erzeugen von Vliesen mit einem Spaltprozess.

Aufgabe der vorliegenden Erfindung ist daher die Bereitstellung eines einfachen und kostengünstigen Verfahrens zur kontinuierlichen Herstellung von dünnen Carbonfaservliesen im industriellen Maßstab.

Gelöst wird diese Aufgabe durch ein Verfahren zur Herstellung einer Schicht aus Carbonfaservlies, wobei ein Carbonfaservlies als Ausgangsmaterial einem Horizontalspaltprozess in der Probendicke unterzogen wird, wobei das Carbonfaservlies relativ zu einer Messerkonstruktion bewegt wird, um eine Schicht oder nacheinander mehrere Schichten von dem Carbonfaserflies abzuspalten, und bei dem die eine Schicht oder die mehreren Schichten nach dem Abspalten von dem Carbonfaservlies kontinuierlich entfernt wird bzw. werden. Damit ist es möglich, dünne Carbonfaservliese in der industriellen Fertigung kostengünstig herstellen zu können.

Horizontalspalten wird in der Kunststoffverarbeitung (Weichschäume, siehe DE 10 2010 004 205 A1 oder Gummi), in der Lederherstellung (Spaltleder, siehe DE 44 12 432 A1 oder DE 195 06 370 C2), als auch in der Herstellung und Verarbeitung von Vliesstoffen und Wollfilz (siehe DE 3835007 A1) verwendet. Für Carbonfaservliese, auch als Weichfilze bezeichnet, und ähnliche Materialien wird im Stand der Technik kein Spaltprozess verwendet.

Die spezifischen Eigenschaften des ursprünglichen Carbonfaservlieses (mechanisch, thermisch und elektrisch) bleiben weitestgehend unbeeinträchtigt.

Probendicke ist die Dicke einer Probe. Synonym für Probe ist Exemplar. Dicke ist der normgerechte Ausdruck (DIN 6730) für das Maß zwischen sich gegenüberliegenden Oberflächen. Ein Carbonfaserflies stellt ein flächiges Gebilde dar. Die Probendicke ist damit das Maß zwischen den beiden Oberflächen (bei horizontaler Lage: Oberseite und Unterseite) desjenigen flächigen Gebildes, das dem erfindungsgemäßen Verfahren unterzogen wird. Das Horizontalspalten bezeichnet daher das Spalten eines flächigen Gebildes in seiner gesamten Fläche zwischen seinen Oberflächen, sodass zwei flächige Gebilde erhalten werden, von welchen jedes flächenmäßig gleich groß ist wie das ursprüngliche Flächengebilde.

Mit dem erfindungsgemäßen Verfahren können, auch aus einem einzigen dicken textilen Halbzeug, überraschend mehrere dünne flexible Weichfilze aus Carbonfasern herausgeschnitten werden, was sowohl die Prozesseffizienz massiv erhöht, als auch die kontinuierliche Herstellung von dünnen, Hochtemperatur-behandelten Vliesen überhaupt erst ermöglicht.

Bevorzugt werden die eingesetzten Carbonfaservliese durch Vernadelung oder durch Wasserstrahlverfestigung hergestellt. Bei der Vernadelung werden kardierte Faserflore mechanisch verfestigt, wobei metallische Nadeln mit Widerhaken Fasern durch das Material ziehen. Bei Wasserstrahlverfestigung wird nicht mit Nadeln, sondern mit einem starken Wasserstrahl gearbeitet.

Es ist bevorzugt, dass die Dicke des Carbonfaservlieses 3-50 mm beträgt und die Dicke einer abgespaltenen Schicht mindestens 0,2 mm beträgt. Es ist von besonderem Vorteil, dass dünne Carbonfaservliese kontinuierlich hergestellt werden können und dicke Carbonfaservliese als Halbzeug nutzbar sind. Ein dünnes Carbonfaservliese im Sinne dieser Erfindung ist beispielsweise eine abgespaltene Schicht mit einer Dicke von 0,2 mm bis 2 mm.

Es ist bevorzugt, dass das Carbonfaservlies auf Viskose, Polyacrylnitril (PAN), Pech oder Lignin basiert. Auch andere Vliesstoffe sind möglich, wobei Materialien aus allen derzeit verfügbaren Kohlenstofffasern aus verschiedenen Kohlenstoffquellen eingeschlossen werden können. Damit besteht eine hohe Flexibilität hinsichtlich des Faserrohstoffs.

Vorzugsweise handelt es sich bei der Messerkonstruktion um fräserartige Schneidwerkzeuge, um Bandmesser, um Doppelbandmesser mit zwei aneinanderliegenden, jeweils einseitig angeschliffenen Einzelbandmessern oder um starre, linealartige Spaltmesser mit oszillierendem Antrieb. Die Messer der erfindungsgemäßen Messerkonstruktion können besonders bevorzugt kontinuierlich oder bevorzugt in Intervallen geschliffen und automatisch nachgestellt werden, um die horizontale Position konstant zu halten. Der Schleifstaub wird dabei abgesaugt. Eine weitere Absaugung unterhalb der Walzen sorgt dafür, dass die untere Lage inklusive dem anfallenden Abtrag sauber entfernt wird.

Vorzugsweise erfolgt das Abspalten und Entfernen von einer Schicht oder mehrerer Schichten gleichmäßig und mit konstanter Zugkraft. Dabei können selbst dünne Schichten von deutlich weniger als 5 mm Dicke kontrolliert und sicher abgeführt werden.

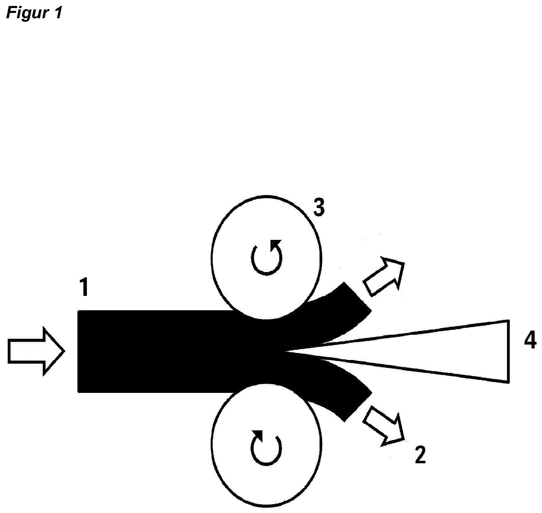

Zugkraft ist eine Kraft, die einen mechanischen Körper zieht, also am Körper auf den Krafterzeuger hin wirkt. Bei einer erfindungsgemäßen Anlage kann ein mechanischer Aufwickler eine Geschwindigkeit an der Anlage einstellen, wobei Filz von der Anlage abgezogen wird. Die Zugkraft kann in diesem Fall kleiner ein Kilonewton betragen. Die beiden Spaltfilze (Fig. 1) werden bevorzugt mit kontrolliert identischer Kraft abgezogen, was zu einem stabilen Spannungszustand und gleichbleibenden Dicken führt.

Ein weiterer Aspekt der vorliegenden Erfindung ist die gemäß dem erfindungsgemäßen Verfahren hergestellte Schicht aus Carbonfaservlies. Wie eingangs beschrieben, werden dünne Carbonfaservliese nach bekannten Verfahren originär hergestellt, das heißt die entsprechende Vliesbildungsmaschine liefert gleich das Vlies in der gewünschten Dicke. Die Oberfläche dieser originär hergestellten Schichten ist dabei, bedingt durch den textilen Herstellprozess, nicht völlig gleichmäßig und weist Unebenheiten auf. Die Oberfläche der erfindungsgemäß hergestellten Schicht aus Carbonfaservlies ist durch das exakte Spalten mit einem scharfen Bandmesser jedoch deutlich gleichmäßiger und ebener. Ein weiteres Unterscheidungsmerkmal ist, dass durch den Schneidvorgang eine Häufung an endständigen Carbonfasern an der Oberfläche der Vliesschicht vorliegt. Erfindungsgemäß gespaltene und originär hergestellte dünne Carbonfaservliese sind daher allein optisch, also durch Betrachten, voneinander unterscheidbar.

Anspruchsgemäß betrifft die Erfindung auch eine Schicht aus Carbonfaservlies, die geeignet ist als Elektrodenmaterial für Batterieanwendungen, Hochtemperatur-Batterien, Redox-Flow-Batterien, als Hochtemperatur-Isolationsmaterial oder für Gasdiffusionsschichten in Brennstoffzellen, wobei diese Schicht herstellbar nach einem Verfahren ist, bei dem ein Carbonfaservlies als Ausgangsmaterial einem Horizontalspaltprozess in der Probendicke unterzogen wird, wobei das Carbonfaservlies relativ zu einer Messerkonstruktion bewegt wird, um eine Schicht oder nacheinander mehrere Schichten von dem Carbonfaservlies abzuspalten, und bei dem die eine Schicht oder die mehreren Schichten nach dem Abspalten von dem Carbonfaservlies kontinuierlich entfernt wird bzw. werden.

Die Verwendung der einen oder mehreren Schichten aus Carbonfaservlies, hergestellt nach dem erfindungsgemäßen Verfahren, erfolgt bevorzugt als Elektrodenmaterial für Batterieanwendungen, Hochtemperatur-Batterien, Redox-Flow-Batterien oder Hochtemperatur-Isolationsmaterial. Damit ist eine vielseitige Einsetzbarkeit gegeben. Da gerade die Energiespeichertechnologien unter einem hohen Preisdruck stehen, ist das wirtschaftliche erfindungsgemäße Verfahren für erneuerbare Energien von großem Vorteil.

Weiter bevorzugt erfolgt die Verwendung der einen oder mehreren Schichten aus Carbonfaservlies hergestellt nach dem erfindungsgemäßen Verfahren für Gasdiffusionsschichten (GDL) in Brennstoffzellen. Beispiele für verwendete GDL Materialen sind ein 3D-Vlies oder ein 2D-Papier. Da das erfindungsgemäße Verfahren auch bei diesen sehr dünnen Materialien anwendbar ist, ist ein noch breiteres Technologiespektrum gegeben.

In Figur 1 ist dargestellt, wie ein erfindungsgemäßer Carbonfaservlies-Körper (1) mit einem umlaufenden Bandmesser (4) in zwei Hälften gespalten und über Transportwalzen (3) zu Rollenware verarbeitet wird. Natürlich ist neben diesem symmetrischen Spaltvorgang auch ein asymmetrischer Spaltvorgang technisch möglich. Da kontinuierliches Schleifen möglich ist, kann eine kontinuierliche Bearbeitung erfolgen, was zu einem konstant guten Schnittbild führt.

Mit Hilfe des nachfolgenden Ausführungsbeispiels wird die Erfindung näher erläutert:
Ein 6 mm dicker Carbonfaserfilz auf Viskosebasis wird in zwei 3 mm dicke Hälften gespalten. Die Dicke der gespaltenen Rollen wird durch die vertikalen Positionen der Vorschubwalzen bestimmt, die das Material durch die Maschine fördern. Für ein symmetrisches Spaltergebnis sind für die obere und die untere Walze identische Einstellungen zu treffen.

Da das Material leicht komprimiert werden muss, um einen Transport sicherzustellen, ist der Spalt etwas kleiner einzustellen als die Hälfte der Ausgangsdichte. Bei dem Carbonfaserfilz wird eine Kompression von 10% verwendet, da bei diesem Wert noch keine Materialschädigung auftritt. Dadurch betragen der obere und der untere Versatz der Transportwalzen 2,7 mm.

Die Vorschubgeschwindigkeit der Anlage beträgt 8 m/min, die Rotationsgeschwindigkeit des Bandmessers 5 m/s. Das Bandmesser wird kontinuierlich geschliffen, um ein sauberes Schnittbild sicherzustellen.

Das Ergebnis sind zwei Rollen Spaltfilz. Die gespaltene Oberfläche ist überraschend gut (optisch glatt und gleichmäßig). In Dickenrichtung ist ein spezifischer elektrischer Widerstand messbar.

Eine Absaugeinrichtung über die gesamte Filzbreite sorgt für weitestgehende Staubund Partikelfreiheit des gespaltenen Produkts.

Gemessene Eigenschaftswerte (Prüfung von Kohlenstoffmaterialien) der gespaltenen Kohlenstofffaserfilze auf PAN- bzw. Viskosebasis:
Bestimmung des Aschewertes (Feststoffe)

### Aschewert in Anlehnung an DIN 51903 (bei 580°C):

<0,05% (PAN-basiert);
<0,1% (Viskose-basiert)

### Bestimmung des spezifischen elektrischen Widerstands nach dem Strom-Spannungsverfahren (Feststoffe)

### ER (x/y) in Anlehnung an DIN 51911 (senkrecht zur Filzebene):

< 5 Ωmm (PAN-basiert);
< 12 Ωmm (Viskose-basiert)

### Bestimmung des spezifischen elektrischen Widerstands nach dem Strom-Spannungsverfahren (Feststoffe)

### ER (z) in Anlehnung an DIN 51911 (in Filzebene):

< 2 Ωmm (PAN-basiert);
< 4 Ωmm (Viskose-basiert)

### Wärmeleitfähigkeit bei Raumtemperatur nach dem Vergleichsverfahren (Feststoffe)

### WLF gemäß DIN 51908 (senkrecht zur Filzebene):

0,1 - 0,4 W/mK (PAN-basiert);
0,02-0,1 W/mK (Viskose-basiert).

### Legende zu Figur 1

1. Carbonfaservlies-Körper
2. abgespaltene Schicht
3. Umlenkwalze
4. Transportwalze

## Patentansprüche

1. Schicht aus Carbonfaservlies (1), die geeignet ist als Elektrodenmaterial für Batterieanwendungen, Hochtemperatur-Batterien, Redox-Flow-Batterien, als Hochtemperatur-Isolationsmaterial oder für Gasdiffusionsschichten in Brennstoffzellen,
**gekennzeichnet durch**
eine Häufung an endständigen Carbonfasern an der gespaltenen Oberfläche der Schicht.

2. Schicht aus Carbonfaservlies nach Anspruch 1, wobei die Dicke der Schicht 0,2 bis 2 mm beträgt.

3. Hochtemperatur-Batterie, umfassend eine Schicht aus Carbonfaservlies gemäß einem der Ansprüche 1 oder 2 als Elektrodenmaterial.

4. Redox-Flow-Batterie, umfassend eine Schicht aus Carbonfaservlies gemäß einem der Ansprüche 1 oder 2 als Elektrodenmaterial.

5. Brennstoffzelle, umfassend eine Schicht aus Carbonfaservlies nach einem der Ansprüche 1 oder 2 als Gasdiffusionsschicht.

6. Eine Ofenisolation, umfassend eine Schicht aus Carbonfaservlies gemäß einem der Ansprüche 1 oder 2 als Hochtemperatur-Isolationsmaterial.

7. Verwendung der Schicht aus Carbonfaservlies gemäß einem der Ansprüche 1 oder 3 als Elektrodenmaterial für Batterieanwendungen, Hochtemperatur-Batterien, Redox-Flow-Batterien oder Hochtemperatur-Isolationsmaterial.

8. Verwendung der Schicht aus Carbonfaservlies nach einem der Ansprüche 1 oder 3 für Gasdiffusionsschichten in Brennstoffzellen.

9. Verfahren zur Herstellung einer Schicht aus Carbonfaservlies (1), wobei ein Carbonfaservlies als Ausgangsmaterial einem Horizontalspaltprozess in der Probendicke unterzogen wird, wobei das Carbonfaservlies relativ zu einer Messerkonstruktion (4) bewegt wird, um eine Schicht oder nacheinander mehrere Schichten von dem Carbonfaservlies abzuspalten, und bei dem die eine Schicht (2) oder die mehreren Schichten nach dem Abspalten von dem Carbonfaservlies (1) kontinuierlich entfernt wird bzw. werden.

10. Verfahren nach Anspruch 9, wobei die Dicke des zu spaltenden Carbonfaservlieses 3-50 mm beträgt.

11. Verfahren nach Anspruch 9, wobei das als Ausgangsmaterial des Horizontalspaltprozesses dienende Carbonfaservlies in einem mehrstufigen Temperaturprozess bei 1800 bis 3000°C hergestellt wird.

12. Verfahren nach Anspruch 9, wobei das Carbonfaservlies auf Viskose, PAN, Pech oder Lignin basiert.

13. Verfahren nach Anspruch 9, wobei es sich bei der Messerkonstruktion um fräserartige Schneidwerkzeuge, um Bandmesser, um Doppelbandmesser mit zwei aneinanderliegenden, jeweils einseitig angeschliffenen Einzelbandmessern oder um starre, linealartige Spaltmesser mit oszillierendem Antrieb handelt.

14. Verfahren nach Anspruch 9, wobei das Abspalten und Entfernen von einer oder mehrerer Schichten gleichmäßig und mit konstanter Zugkraft erfolgt.

## Claims

1. Layer of carbon fibre non-woven (1) which is suitable as electrode material for battery applications, high-temperature batteries, redox flow batteries, as high-temperature insulation material or for gas diffusion layers in fuel cells,
**characterised by**
an accumulation of terminal carbon fibres on the split surface of the layer.

2. Layer of carbon fibre non-woven according to claim 1, wherein the thickness of the layer is 0.2 to 2 mm.

3. High-temperature battery comprising a layer of carbon fibre non-woven according to one of claims 1 or 2 as electrode material.

4. Redox flow battery comprising a layer of carbon fibre non-woven according to one of claims 1 or 2 as electrode material.

5. Fuel cell comprising a layer of carbon fibre non-woven according to one of claims 1 or 2 as a gas diffusion layer.

6. Furnace insulation comprising a layer of carbon fibre non-woven according to one of claims 1 or 2 as high-temperature insulation material.

7. Use of the layer of carbon fibre non-woven according to one of claims 1 or 3 as electrode material for battery applications, high-temperature batteries, redox flow batteries or high-temperature insulation material.

8. Use of the layer of carbon fibre non-woven according to one of claims 1 or 3 for gas diffusion layers in fuel cells.

9. Method for producing a layer of carbon fibre non-woven (1), wherein a carbon fibre non-woven as a starting material is subjected to a horizontal splitting process in the sample thickness, wherein the carbon fibre non-woven is moved relative to a blade construction (4) in order to split off one layer or a plurality of layers in succession from the carbon fibre non-woven, and in which the one layer (2) or the plurality of layers is/are continuously removed from the carbon fibre non-woven (1) after the splitting.

10. Method according to claim 9, wherein the thickness of the carbon fibre non-woven to be split is 3-50 mm.

11. Method according to claim 9, wherein the carbon fibre non-woven which acts as a starting material of the horizontal splitting process is produced in a multi-stage temperature process at 1800 to 3000°C.

12. Method according to claim 9, wherein the carbon fibre non-woven is based on viscose, PAN, pitch or lignin.

13. Method according to claim 9, wherein the blade construction relates to milling cutter-like cutting tools, band knives, double band knives having two adjacent single band knives each sharpened on one side, or rigid, ruler-like splitting knives having an oscillating drive.

14. Method according to claim 9, wherein the splitting and removal of one or more layers is carried out uniformly and with constant tensile force.

## Revendications

1. Couche de non-tissé de fibres de carbone (1) convenant comme matériau d'électrode pour des applications de batteries, batteries à haute température, batteries à flux redox, comme matériau d'isolation à haute température ou pour des couches de diffusion de gaz dans des piles à combustible,
**caractérisée par**
une accumulation de fibres de carbone terminales au niveau de la surface fendue de la couche.

2. Couche de non-tissé de fibres de carbone selon la revendication 1, dans laquelle l'épaisseur de la couche est de 0,2 à 2 mm.

3. Batterie à haute température, comprenant une couche de non-tissé de fibres de carbone selon l'une des revendications 1 ou 2 comme matériau d'électrode.

4. Batterie à flux redox, comprenant une couche de non-tissé de fibres de carbone selon l'une des revendications 1 ou 2 comme matériau d'électrode.

5. Pile à combustible, comprenant une couche de non-tissé de fibres de carbone selon l'une des revendications 1 ou 2 comme couche de diffusion de gaz.

6. Isolation de four, comprenant une couche de non-tissé de fibres de carbone selon l'une des revendications 1 ou 2 comme matériau d'isolation à haute température.

7. Utilisation de la couche de non-tissé de fibres de carbone selon l'une des revendications 1 ou 3 comme matériau d'électrode pour des applications de batterie, batteries à haute température, batteries à flux redox ou comme matériau d'isolation à haute température.

8. Utilisation de la couche de non-tissé de fibres de carbone selon l'une des revendications 1 ou 3 pour des couches de diffusion de gaz dans des piles à combustible.

9. Procédé de fabrication d'une couche de non-tissé de fibres de carbone (1), dans lequel un non-tissé de fibres de carbone est soumis comme matériau de départ à un processus de fente horizontale dans l'épaisseur d'échantillon, dans lequel le non-tissé de fibres de carbone est déplacé par rapport à un ensemble de coupe (4) afin de fendre une couche ou successivement plusieurs couches du non-tissé de fibres de carbone, et dans lequel la couche (2) ou les couches sont éliminées en continu après la fente du non-tissé de fibres de carbone (1).

10. Procédé selon la revendication 9, dans lequel l'épaisseur du non-tissé de fibres de carbone à fendre est de 3 à 50 mm.

11. Procédé selon la revendication 9, dans lequel le non-tissé de fibres de carbone servant de matériau de départ au processus de fente horizontale est fabriqué dans un processus de température en plusieurs étapes entre 1800 et 3000 °C.

12. Procédé selon la revendication 9, dans lequel le non-tissé de fibres de carbone est à base de viscose, PAN, brai ou lignine.

13. Procédé selon la revendication 9, dans lequel l'ensemble de coupe est un outil de coupe de type fraise, un couteau ruban, un couteau double ruban comportant deux couteaux rubans simples placés l'un à côté d l'autre et affûtés respectivement d'un côté, ou un couteau à fendre linéaire rigide comportant un entraînement oscillant.

14. Procédé selon la revendication 9, dans lequel la fente et l'élimination d'une ou de plusieurs couches sont effectuées de manière uniforme et avec une force de traction constante.
